# EUROPÄISCHE PATENTSCHRIFT

(11) **EP 3 901 658 B1**
(45) Veröffentlichungstag und Bekanntmachung des Hinweises auf die Patenterteilung: **24.09.2025**
(21) Anmeldenummer: 21166885.0
(22) Anmeldetag: 06.04.2021
(51) Int. Cl.: G01S 7/521, G01S 15/08, G01S 15/88, G01G 19/08

(54) **SENSORVORRICHTUNG MIT EINEM ULTRASCHALLSENSOR**
SENSOR DEVICE WITH AN ULTRASOUND SENSOR
DISPOSITIF CAPTEUR DOTÉ D'UN CAPTEUR À ULTRASONS

(30) Priorität: 23.04.2020 DE 102020205194
(43) Veröffentlichungstag der Anmeldung: 27.10.2021
(73) Patentinhaber: Continental Automotive Technologies GmbH, 30175 Hannover (DE)
(72) Erfinder: Becker, Ralf, 60488 Frankfurt am Main (DE); Glitsch, Rolf, 60488 Frankfurt am Main (DE)
(74) Vertreter: Aumovio Corporation

(56) Entgegenhaltungen:
- WO-A1-93/20412
- JP-A- H08 210 905
- US-A1- 2004 182 149
- US-A1- 2017 254 694

## Beschreibung

Die Erfindung bezieht sich auf eine Sensorvorrichtung mit einer einen Ultraschallsensor aufweisenden Sensoreinheit und mit einem Messrohr, wobei die Sensoreinheit an einem Rohrende des Messrohres angeordnet ist. Darüber hinaus bezieht sich die Erfindung auf ein Kraftfahrzeug mit einer solchen Sensorvorrichtung.

Eine eingangs genannte Sensorvorrichtung ist beispielsweise von einer Kolben-Zylinder-Anordnung mit einer Bewegungserfassungseinrichtung bekannt. Dabei entspricht der Zylinder dieser Anordnung dem Messrohr, und innerhalb einer an einem ersten Ende des Zylinders angeordneten Kolbenstangenführung ist die Bewegungserfassungseinrichtung, die aus einem Sender und einem Empfänger besteht, angeordnet. Während eines Betriebs der Bewegungserfassungseinrichtung werden Schallwellen ausgesendet, und eine Laufzeit der ausgesendeten Schallwellen ist ein Maß für eine Entfernung zwischen einer Schallquelle der Bewegungserfassungseinrichtung und einem die ausgesendeten Schallwellen reflektierenden Reflexionskörper.

Die bekannte Sensorvorrichtung erfordert eine jeweils speziell auf den korrespondierenden Zylinder der Sensorvorrichtung abgestimmte und an diesen angepasste Kolbenstangenführung mit Bewegungserfassungseinrichtung. Dadurch ist eine Herstellung einer solchen Sensorvorrichtung nicht nur kostspielig, sondern es ist zudem aufwendig, eine derartige Sensorvorrichtung beispielsweise an unterschiedliche Kraftfahrzeugtypen anzupassen.

Eingebaut in ein Kraftfahrzeug kann eine solche Sensorvorrichtung beispielsweise zur Messung einer Höhenänderung eines Fahrzeugaufbaus des Kraftfahrzeugs verwendet werden. Die Höhenänderung kann beispielsweise als Maß für eine Gewichtslast, zum Beispiel einer Beladung des Kraftfahrzeugs, ausgewertet werden.

Aus WO 93/20412 A1 ist eine Vorrichtung zur Messung einer Distanz mittels eines Ultraschallwandlers bekannt. Die Vorrichtung besteht mindestens aus einem Messrohr, einem Schwimmer und einem Reflektor. Zwischen dem Ultraschallwandler und dem Messrohr kann ein Zwischenrohrstück angeordnet sein.

JP H08 210905 A offenbart eine Ladegewichtsmesseinrichtung für einen Lastkraftwagen. Abstandssensoren, die Ultraschallsensoren sein können, sollen dabei Abstände zwischen einem Aufbau des Lastkraftwagens und an Unterteilen des Aufbaus angebrachten Achsen messen.

Ein Flüssigkeitsstandsdetektor, der einen Detektorkörper, einen akustoelektrischen Wandler und einen akustischen Wellenleiter umfasst, ist aus US 2004/182149 A1 bekannt. Der Wellenleiter kann in Form eines Rohres ausgebildet sein und ist mit dem Detektorkörper mittels einer Muffenkupplung verbunden.

Ein fahrzeugeigenes Ladegewichtsmesssystem für Fahrzeuge mit einer Luftfederung und/oder einer mechanischen Federung offenbart US 2017/254694 A1. Das Ladegewichtsmesssystem umfasst Widerstandssensoren oder induktive Sensoren.

Der Erfindung liegt die Aufgabe zugrunde, eine Sensorvorrichtung der eingangs genannten Art zu schaffen, die eine einfache und zuverlässige Anordnung der Sensoreinheit an dem Messrohr bei gleichzeitig hoher Funktionssicherheit der Sensorvorrichtung ermöglicht. Zudem ist es Aufgabe der Erfindung, ein Kraftfahrzeug mit einer solchen Sensorvorrichtung zu schaffen.

Die erstgenannte Aufgabe wird erfindungsgemäß mit einer Sensorvorrichtung nach Anspruch 1 gelöst.

Aufgrund des in der Sensorvorrichtung vorhandenen speziellen Sensoradapters ergibt sich mit der Erfindung der besondere Vorteil, dass beispielsweise ein bestimmter Typ einer Sensoreinheit allein durch angepasste Wahl eines jeweils geeigneten Sensoradapters bei unterschiedlichen Messrohrtypen verwendet werden kann. Auf diese Weise ergeben sich insbesondere bei einer Großserienfertigung von Sensorvorrichtungen für zum Beispiel verschiedene Einsatzzwecke erhebliche Kostenvorteile. Die vorgenannten verschiedenen Messrohrtypen können sich zum Beispiel dadurch unterscheiden, dass Messrohre je nach Messrohrtyp einen voneinander abweichenden Messrohrinnendurchmesser und/oder einen voneinander abweichenden Messrohraußendurchmesser aufweisen.

Zudem ermöglicht bei der Erfindung der das Rohrende umgreifende Adapterrohrabschnitt eine besonders einfache und zuverlässige Montage der Sensoreinheit an dem Messrohr. Aufgrund der das Rohrende verschließenden Anordnung des Sensoradapters an dem Rohrende wird überdies sichergestellt, dass von der Seite der Sensoreinheit her keine Störkörper wie zum Beispiel Feuchtigkeit oder Verschmutzungspartikel in einen Messraum innerhalb des Messrohres eindringen können.

Der Ultraschallsensor ist vorteilhaft geschützt innerhalb des Messrohres angeordnet. Das Messrohr kann in einfacher Weise zum Beispiel mit Luft gefüllt sein. Grundsätzlich ist es aber auch denkbar, dass das Messrohr ein anderes Gas oder eine Flüssigkeit aufweist.

Vorzugsweise ist das Messrohr linear, das heißt geradlinig, ausgebildet. Die Sensoreinheit verschließt gemeinsam mit dem Sensoradapter das Rohrende des Messrohres. Der Sensoradapter ist an dem Rohrende vorzugsweise befestigt, wobei eine solche Befestigung lösbar oder unlösbar sein kann.

Durch die vorteilhafte Eignung der erfindungsgemäßen Sensorvorrichtung für eine, gegebenenfalls zudem variantenreiche, Großserienfertigung aufgrund des Sensoradapters und unter anderem dessen besonderer Ausbildung mit dem Adapterrohrabschnitt ist die erfindungsgemäße Sensorvorrichtung insbesondere geeignet zur Verwendung in einem Kraftfahrzeug. Vorzugsweise dient die Sensorvorrichtung zur Messung einer Änderung einer Höhe eines Fahrzeugaufbaus gegenüber einem Fahrwerk des Kraftfahrzeugs. Vorteilhaft ist die Sensorvorrichtung geeignet zu einer Verwendung in einem On-Board-Weighing-System eines Kraftfahrzeugs, insbesondere eines Nutzfahrzeugs, zum Beispiel eines Lastkraftwagens.

Es wird vorteilhaft eine weiter erhöhte Flexibilität des Einsatzes der Sensoreinheit gemäß der Erfindung erreicht, da die Sensoreinheit und der Sensoradapter lösbar miteinander verbunden sind. Auf diese Weise kann zum Beispiel durch Wahl eines entsprechend angepassten Sensoradapters ein bestimmter Typ einer Sensoreinheit mit unterschiedlichen Typen von Messrohren verbunden oder verwendet werden, um eine Sensorvorrichtung zu bilden. Vorzugsweise kann der Sensoradapter einen Verdrehschutz aufweisen, der dazu dient, eine verdrehsichere Lage des Sensoradapters gegenüber der Sensoreinheit zu gewährleisten. Der Verdrehschutz kann zum Beispiel als Adapterausnehmung an dem Sensoradapter ausgebildet sein. **In** die Adapterausnehmung greift die Sensoreinheit passgenau ein.

Es ist zum Beispiel grundsätzlich denkbar, dass der Sensoradapter der Sensoreinheit mit dem Rohrende des Messrohres verklebt oder beispielsweise verschraubt ist. Ferner ist es beispielsweise denkbar, dass der Sensoradapter zum Beispiel auf das Rohrende aufgesteckt und mittels der Halteklammer an dem Rohrende gesichert ist. Eine besonders einfache und zugleich lagesichere, insbesondere verdrehsichere, Anordnung des Sensoradapters an dem Rohrende kann hingegen erreicht werden, wenn gemäß einer anderen vorteilhaften Weiterbildung der Erfindung der Sensoradapter und das Rohrende eine Verrastung aufweisen. Dabei können insbesondere der Adapterrohrabschnitt des Sensoradapters und das Rohrende die Verrastung aufweisen. Die Verrastung ist eine gemeinsame Verrastung von Sensoradapter und Rohrende. Die Verrastung könnte auch als Verklipsung bezeichnet werden. Vorzugsweise kann die Verrastung derart ausgebildet sein, dass sie einen Spritzwasserschutz gewährleistet und somit eine spritzwassergeschützte Verbindung von Sensoradapter und Rohrende herstellt. Gegebenenfalls kann die Verrastung zusätzlich zu einer Halteklammerverbindung von Sensoradapter und Rohrende vorgesehen sein.

Der Aufbau der Sensorvorrichtung wird vorteilhaft weiter vereinfacht, da erfindungsgemäß an dem Sensoradapter eine den Sensoradapter mit der Sensoreinheit verbindende Halteklammer angeordnet ist. Somit sind Sensoreinheit und Sensoradapter in vorteilhafter Weise mittels eines einzigen Bauelements, nämlich der Halteklammer, miteinander verbunden, und zwar bevorzugt lösbar miteinander verbunden. Die Halteklammer kann zum Beispiel als Klips ausgebildet sein. Die Halteklammer kann insbesondere konzentrisch zu einer Messrohrmittelachse des Messrohres angeordnet sein. Außerdem kann die Halteklammer vorteilhaft eine Verplombung aufweisen, so dass zum Beispiel ein Zugriff auf die Sensoreinheit in manipulativer Absicht zu einer Zerstörung der Verplombung führt und somit auch im Nachhinein erkennbar ist. Die Halteklammer kann in einer weiteren Ausführungsform an dem Sensoradapter oder an der Sensoreinheit unverlierbar angeordnet sein.

Einer vorteilhaften Weiterbildung der Erfindung gemäß, weist der Sensoradapter zumindest einen Schlitz auf, und die Halteklammer greift zumindest teilweise in den Schlitz ein. Damit wird gleichzeitig eine vereinfachte Herstellung der Sensorvorrichtung ermöglicht und ein zuverlässiger Sitz der Halteklammer an dem Sensoradapter gewährleistet. Der Schlitz des Sensoradapters kann vorzugsweise ein Umfangschlitz sein. Insbesondere kann der Schlitz senkrecht, nämlich quer, zu der Messrohrmittelachse des Messrohres angeordnet sein. Die Halteklammer kann vorzugsweise zumindest teilweise in dem Schlitz angeordnet sein. Vorzugsweise weist der Sensoradapter zwei Schlitze auf, und die Halteklammer greift mit jeweils einem Halteklammerschenkel in jeweils einen der Schlitze ein.

Man könnte sich zum Beispiel vorstellen, dass der Sensoradapter und das Rohrende miteinander verklebt oder beispielsweise allein mittels einer Verrastung miteinander verbunden sind. Hingegen sieht die Erfindung vor, dass die Halteklammer den Sensoradapter an dem Rohrende sichert. Auf diese Weise ist eine zuverlässige, aber dennoch beispielsweise zu Wartungszwecken einfach lösbare Anordnung der Sensoreinheit an dem Messrohr ermöglicht. Die Halteklammer kann zusätzlich zu einer Verrastung, zum Beispiel zusätzlich zu einer oben beschriebenen Verrastung, von Sensoradapter und Rohrende vorhanden sein. Die Halteklammer kann dann beispielsweise die Verrastung sichern, zum Beispiel die Verrastung vor einem, insbesondere unbeabsichtigten, Lösen der Verrastung selbst schützen.

Gemäß einer anderen vorteilhaften Weiterbildung der Erfindung ist zwischen der Sensoreinheit und dem Sensoradapter eine Dichtung angeordnet. Auf diese Weise kann insbesondere auch dann, wenn die Sensoreinheit und der Sensoradapter lösbar miteinander verbunden sind, ein sicheres Verschließen des Rohrendes des Messrohres ermöglicht werden. Die Dichtung kann vorzugsweise ein O-Ring, auch bezeichnet als Runddichtring oder Rundschnurring, sein. Die Dichtung kann beispielsweise durch eine Halteklammer, insbesondere durch eine oben beschriebene Halteklammer, gesichert sein.

Es ist grundsätzlich denkbar, dass die Sensoreinheit zum Beispiel eine feste Kabelverbindung zu beispielsweise einem Steuergerät eines Kraftfahrzeugs besitzt. Beispielsweise für einen nachträglichen Einbau einer erfindungsgemäßen Sensorvorrichtung in zum Beispiel ein Kraftfahrzeug ist es hingegen von besonderem Vorteil, wenn gemäß einer Weiterbildung der Erfindung die Sensoreinheit ein Sensoranschlusselement aufweist. Das Sensoranschlusselement kann zum Beispiel als Stecker ausgebildet sein. Das Sensoranschlusselement kann auch eine Sensorelektronik, zum Beispiel zur Signalaufbereitung eines Messsignals des Ultraschallsensors der Sensoreinheit, aufweisen.

Die oben zweitgenannte Aufgabe wird gelöst mit einem Kraftfahrzeug nach Anspruch 6.

Bei dem Fahrwerk des Kraftfahrzeugs kann es sich zum Beispiel um ein ungefedertes Fahrwerk handeln. Der Fahrzeugaufbau kann insbesondere ein gefederter Fahrzeugaufbau sein. Zur Federung des Fahrzeugaufbaus kann zwischen Fahrwerk und Fahrzeugaufbau zumindest eine Feder, zum Beispiel eine Blattfeder, insbesondere ein Blattfederpaket, und/oder eine Luftfeder, angeordnet sein. Abhängig von einer Beladung oder Entladung des Fahrzeugaufbaus wird die zwischen Fahrwerk und Fahrzeugaufbau angeordnete Feder belastet oder entlastet, das heißt es erfolgt eine Änderung der Gewichtslast auf die Feder. Korrespondierend mit der Änderung der Gewichtslast, das heißt der Belastung oder Entlastung der Feder, verändert sich ein Abstand zwischen Fahrwerk und Fahrzeugaufbau. Eine solche Änderung des Abstands, die auch als Höhenänderung zwischen Fahrwerk und Fahrzeugaufbau bezeichnet oder angesehen werden kann, kann vorteilhaft mittels der Sensorvorrichtung erfasst und gemessen werden. Eine solche Höhenänderung ist ein Maß für eine Änderung einer Gewichtslast auf dem Fahrzeugaufbau. Somit kann durch Messung der Höhenänderung eine Aussage über die Größe der Beladung des Kraftfahrzeugs getroffen werden. Eine Beladung des Kraftfahrzeugs führt zu einer Verringerung des Abstands und somit zu einer negativen Höhenänderung zwischen Fahrzeugaufbau und Fahrwerk, wohingegen eine Entladung des Kraftfahrzeugs zu einer Vergrößerung des Abstands und somit einer positiven Höhenänderung zwischen Fahrzeugaufbau und Fahrwerk führt. Somit kann die Sensorvorrichtung vorteilhaft Bestandteil eines fahrzeugeigenen Gewichtserfassungssystems, eines sogenannten On-Board-Weighing Systems, des Kraftfahrzeugs sein.

Besonders vorteilhaft ist es, dass mit vorliegender Erfindung zum Beispiel eine Anbringung eines Sensors zur Gewichtsmessung unmittelbar auf oder an beispielsweise einer Stahlfeder, insbesondere einer Blattfeder, welche Anbringung zu Beschädigungen der Feder führen könnte, nicht erforderlich ist. Zudem ist mit vorliegender Erfindung weiter vorteilhaft auch eine Anbringung eines Sensors zur Gewichtsmessung unmittelbar auf oder an einer Fahrzeugachse des Kraftfahrzeugs, welche Anbringung zu einer Verfälschung von Messergebnissen führen könnte, da es aufwendig und schwierig ist, zwischen beispielsweise einer zusätzlichen Gewichtslast des Kraftfahrzeugs und einem Überfahren von Fahrwegunebenheiten oder Bordsteinen zu unterscheiden, nicht erforderlich.

Gemäß einer vorteilhaften Weiterbildung der Erfindung ist zwischen dem Fahrzeugaufbau und dem Fahrwerk ein Stoßdämpfer angeordnet, wobei der Stoßdämpfer mit einem ersten Dämpferende an den Fahrzeugaufbau und mit einem zweiten Dämpferende an das Fahrwerk angeschlossen ist und wobei die Sensorvorrichtung an dem Stoßdämpfer angeordnet ist. Von besonderem Vorteil bei einer solchen Weiterbildung ist, dass die Sensorvorrichtung in einfacher Weise nachträglich, zum Beispiel als Zurüstteil, in das Kraftfahrzeug eingebaut werden kann. Der Stoßdämpfer kann insbesondere ein zylindrischer Stoßdämpfer sein. Vorzugsweise ist das Messrohr der Sensorvorrichtung parallel zu dem Stoßdämpfer angeordnet.

Einer anderen vorteilhaften Weiterbildung der Erfindung gemäß ist das erste Rohrende des Messrohres an dem ersten Dämpferende und das zweite Rohrende des Messrohres an dem zweiten Dämpferende befestigt. Vorzugsweise ist das erste Rohrende des Messrohres das Rohrende, an dem der Sensoradapter angeordnet ist. Vorzugsweise kann das Messrohr nachträglich an dem Stoßdämpfer anbringbar, zum Beispiel anschraubbar oder anklipsbar, sein. Außerdem kann das Messrohr lösbar an dem Stoßdämpfer befestigt sein, so dass es zum Beispiel in einfacher Weise von dem Stoßdämpfer demontierbar ist.

Zu der Erfindung gehören auch Weiterbildungen des erfindungsgemäßen Kraftfahrzeugs, die Merkmale aufweisen, wie sie bereits im Zusammenhang mit Weiterbildungen der erfindungsgemäßen Sensorvorrichtung beschrieben worden sind und umgekehrt.

Die Erfindung umfasst auch die Kombinationen der Merkmale der beschriebenen Ausführungsformen.

Ausführungsbeispiele der Erfindung sind in der Zeichnung schematisiert und skizzenhaft dargestellt und werden im Folgenden näher beschrieben. Es zeigen in schematisierter und skizzenhafter Darstellung:
- Fig. 1: einen Ausschnitt einer Sensorvorrichtung in geschnittener Ansicht,
- Fig. 2: die Sensorvorrichtung nach Fig. 1 in einer perspektivischen Ansicht,
- Fig. 3: eine Sensoreinheit der Sensorvorrichtung nach Fig. 1 in einer perspektivischen Ansicht,
- Fig. 4: einen Sensoradapter der Sensorvorrichtung nach Fig. 1 in einer perspektivischen Ansicht,
- Fig. 5: eine Halteklammer der Sensorvorrichtung nach Fig. 1 in einer perspektivischen Ansicht,
- Fig. 6: einen Ausschnitt eines Stoßdämpfers und einer Sensorvorrichtung in einer perspektivischen Ansicht und
- Fig. 7: ein Kraftfahrzeug mit mehreren Sensorvorrichtungen.

Sich jeweils entsprechende Elemente sind in allen Figuren mit gleichen Bezugszeichen versehen.

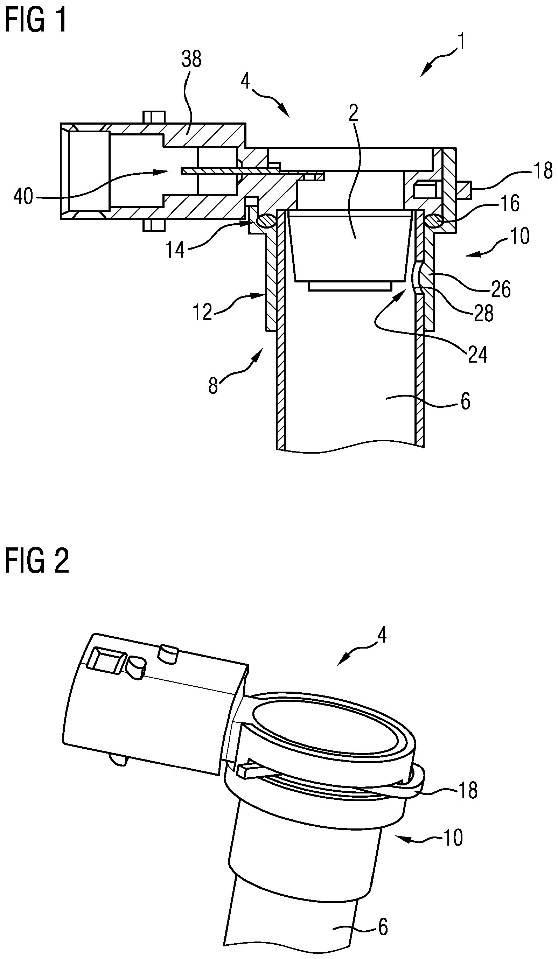

Figur 1 zeigt in schematisierter und skizzenhafter Darstellung einen Ausschnitt einer Sensorvorrichtung 1 mit einer einen Ultraschallsensor 2 aufweisenden Sensoreinheit 4. Die Sensorvorrichtung 1 weist zudem ein lineares Messrohr 6 auf, von welchem hier lediglich ein Abschnitt mit einem ersten Rohrende 8 gezeigt ist. An dem Rohrende 8 ist die Sensoreinheit 4 angeordnet.

Die Sensoreinheit 4 weist einen Sensoradapter 10 auf. Der Sensoradapter 10 weist einen das Rohrende 8 umgreifenden Adapterrohrabschnitt 12 auf und ist an dem Rohrende 8 das Rohrende 8 verschließend angeordnet.

Die Sensoreinheit kann mit dem Sensoradapter ein einziges Bauteil bilden, das heißt insbesondere einstückig ausgebildet sein. **In** dem hier gezeigten Ausführungsbeispiel bilden die Sensoreinheit 4 und der Sensoradapter 10 hingegen zwei Bauteile. Zudem sind die Sensoreinheit 4 und der Sensoradapter 10 lösbar miteinander verbunden.

Zur Abdichtung der Verbindung von Sensoreinheit 4 und Sensoradapter 10 sowie des Rohrendes 8 des Messrohres 6 ist zwischen der Sensoreinheit 4 und dem Sensoradapter 10 eine Dichtung 14 angeordnet. **In** dem hier gezeigten Ausführungsbeispiel ist die Dichtung 14 als O-Ring 16 ausgebildet.

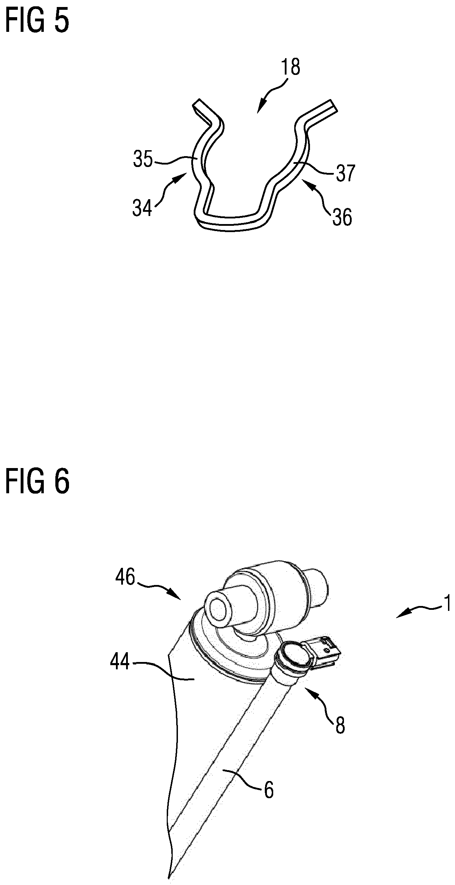

An dem Sensoradapter 10 ist eine den Sensoradapter 10 mit der Sensoreinheit 4 verbindende Halteklammer 18 angeordnet. Dabei sichert die Halteklammer 18 auch die Dichtung 14 zwischen Sensoradapter 10 und Sensoreinheit 4 und gewährleistet so eine zuverlässige Abdichtung. Die Halteklammer 18 sichert zudem den Sensoradapter 10 mit der Sensoreinheit 4 an dem Rohrende 8 des Messrohres 6. Die Halteklammer 18 ist als, hier U-förmiger, Klips ausgebildet (vgl. Figur 5). Sie ist einstückig zum Beispiel aus einem Kunststoffmaterial oder beispielsweise aus einem Metallmaterial, zum Beispiel einem Draht, ausgebildet.

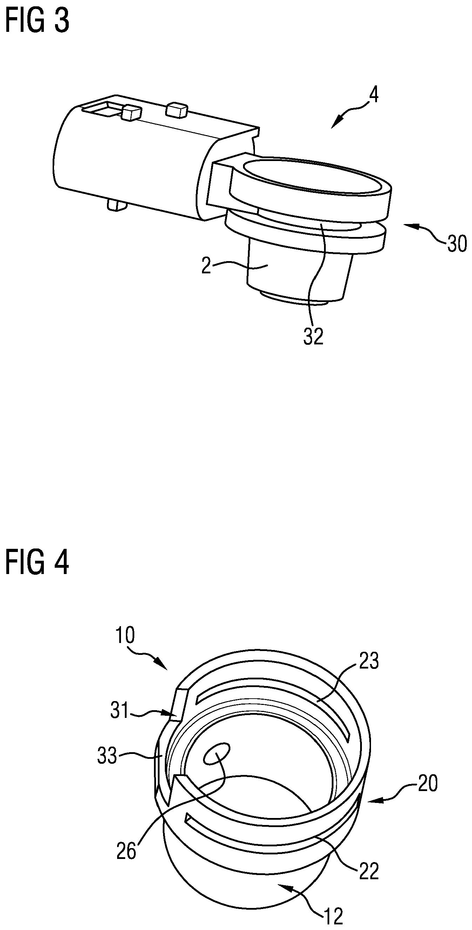

Insbesondere aus Figur 4 wird deutlich, dass der Sensoradapter 10 eine Aufnahme 20 für die Halteklammer 18 aufweist. Die Aufnahme 20 ist in dem hier gezeigten Ausführungsbeispiel als Schlitz 22 ausgebildet. In den Schlitz 22 greift die Halteklammer 18 zumindest teilweise ein (vgl. Figur 2). Außerdem weist die Aufnahme 20 in diesem Ausführungsbeispiel einen zweiten Schlitz 23 auf. Die Halteklammer 18 greift mit jeweils einem Halteklammerschenkel 35, 37 (vgl. Figur 5) in jeweils einen der Schlitze 22, 23 der Aufnahme 20 ein.

Zudem weisen der Sensoradapter 10 und das Rohrende 8 des Messrohres 6 eine gemeinsame Verrastung 24 auf. Die Verrastung 24 weist eine Noppe 26 an dem Adapterrohrabschnitt 12 des Sensoradapters 10 sowie eine Ausnehmung 28 in dem Rohrende 8 des Messrohres 6 auf. Die Ausnehmung 28 korrespondiert derart mit der Noppe 26, dass in einem montierten Zustand von Sensoreinheit 4 und Messrohr 6 die Noppe 26 in das Messrohr 6 einrastet. Die Verrastung 24 gewährleistet unter anderem eine verdrehsichere Anordnung von Sensoradapter 10 und Messrohr 6.

Außerdem weist der Sensoradapter 10 einen Verdrehschutz 31 auf, der dazu dient, eine verdrehsichere Lage des Sensoradapters 10 gegenüber der Sensoreinheit 4 zu gewährleisten. Der Verdrehschutz 31 ist hier als Adapterausnehmung 33 an dem Sensoradapter 10 ausgebildet. In die Adapterausnehmung 33 greift die Sensoreinheit 4 passgenau ein (vgl. Figur 2).

Wie zum Beispiel aus Figur 3 deutlich wird, weist die Sensoreinheit 4 eine mit der Aufnahme 20 des Sensoradapters 10 für die Halteklammer 18 korrespondierende Aufnahme 30 der Sensoreinheit 4 für die Halteklammer 18 auf. Die Aufnahme 30 der Sensoreinheit 4 ist hier als Nut 32 ausgebildet. Figur 5 zeigt die Halteklammer 8 mit in die Aufnahme 20 des Sensoradapters 10 sowie in die Aufnahme 30 der Sensoreinheit 4 eingreifenden Klipsbereichen 34, 36 der Halteklammerschenkel 35, 37.

Die Sensoreinheit 4 weist zudem ein Sensoranschlusselement 38 auf. Das Sensoranschlusselement 38 weist einen Stecker 40 zur Verbindung der Sensorvorrichtung 1 beispielsweise mit einem Steuergerät eines Kraftfahrzeugs auf.

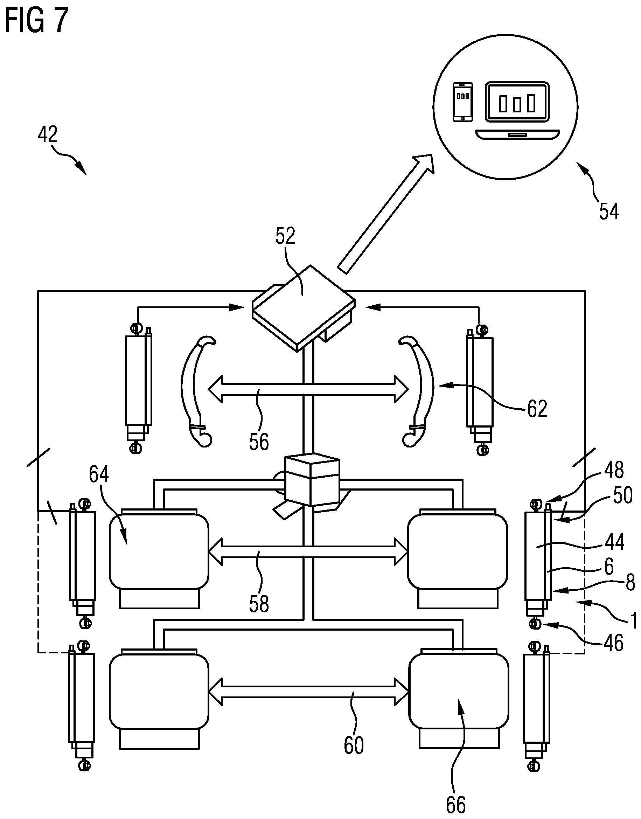

Figur 7 zeigt in skizzenhafter Darstellung ein Kraftfahrzeug 42 mit mehreren zwischen einem Fahrwerk des Kraftfahrzeugs 42 und einem hier nicht dargestellten Fahrzeugaufbau des Kraftfahrzeugs 42 angeordneten Stoßdämpfern 44. Die Stoßdämpfer 44 sind jeweils mit einem ersten Dämpferende 46 an den Fahrzeugaufbau und mit einem zweiten Dämpferende 48 an das Fahrwerk angeschlossen. An den Stoßdämpfern 44 ist jeweils eine Sensorvorrichtung 1 angeordnet (vgl. Figur 6).

Dabei ist jeweils ein erstes Rohrende 8 eines Messrohres 16 an dem jeweiligen ersten Dämpferende 46 und ein zweites Rohrende 50 des jeweiligen Messrohres 16 an dem jeweiligen zweiten Dämpferende 48 befestigt. Die Sensorvorrichtungen 1 sind mit einem Steuergerät 52 des Kraftfahrzeugs 42 verbunden. Eine von dem Steuergerät 52 aus Messwerten der Sensorvorrichtungen 1 berechnete Information über einen Beladungszustand, zum Beispiel ein Ladungsgewicht, des Kraftfahrzeugs 42 kann auf einer Anzeigevorrichtung 54 angezeigt werden. Die Anzeigevorrichtung 54 kann zum Beispiel Bestandteil des Kraftfahrzeugs 42 sein. Es ist aber auch vorstellbar, dass die Anzeigevorrichtung 54 eine fahrzeugexterne Vorrichtung, zum Beispiel eine mobile Kommunikationseinheit wie beispielsweise ein Smartphone oder ein Computer, beispielsweise in einer Speditionszentrale, ist.

Das Kraftfahrzeug 42, das insbesondere ein Nutzfahrzeug, zum Beispiel ein Lastkraftwagen, sein kann, weist in diesem Ausführungsbeispiel eine Vorderachse 56 und eine erste Hinterachse 58 sowie eine zweite Hinterachse 60 auf. Die Vorderachse 56 sowie die beiden Hinterachsen 58, 60 sind Bestandteil des Fahrwerks des Kraftfahrzeugs 42. Der Fahrzeugaufbau des Kraftfahrzeugs 42 ist gegenüber der Vorderachse 56 mittels einer Blattfederung 62 gefedert. Gegenüber den Hinterachsen 58, 60 ist der Fahrzeugaufbau jeweils mittels einer Luftfederung 64, 66 gefedert. Die Blattfederung 62 weist hier zwei Blattfederpakete auf, und die Luftfederungen 64, 66 weisen hier jeweils zwei Luftfedern auf. Parallel zu den Federungen (Blattfederung 62, Luftfederungen 64, 66) sind in dem hier gezeigten Ausführungsbeispiel zwischen den Achsen (Vorderachse 56, Hinterachsen 58, 60) und dem Fahrzeugaufbau jeweils die Sensorvorrichtungen 1 angeordnet. Dabei sind die Sensorvorrichtungen 1 jeweils den einzelnen Federn (Blattfederpakete, Luftfedern) zugeordnet.

Das Kraftfahrzeug 42 weist ein On-Board-Weighing-System, das heißt ein fahrzeugeigenes Gewichtserfassungssystem, auf. Die Sensorvorrichtungen 1 und das Steuergerät 52 sowie die Anzeigevorrichtung 54 sind zumindest teilweise Bestandteil dieses On-Board-Weighing-Systems, und zwar zumindest teilweise, da insbesondere das Steuergerät 52 und die Anzeigevorrichtung 54 neben Funktionen für das On-Board-Weighing-System auch noch weitere Funktionen für das Kraftfahrzeug 42 und gegebenenfalls darüber hinaus übernehmen können.

Insgesamt zeigen die Ausführungsbeispiele, wie durch die Erfindung eine Sensorvorrichtung mit einer einen Ultraschallsensor aufweisenden Sensoreinheit und einem Messrohr sowie ein Kraftfahrzeug mit einer solchen Sensorvorrichtung, insbesondere zur Messung einer Höhenänderung eines Fahrzeugaufbaus gegenüber einem Fahrwerk, insbesondere in einem On-Board-Weighing-System, bereit gestellt werden können.

## Patentansprüche

1. Sensorvorrichtung (1) mit einer einen Ultraschallsensor (2) aufweisenden Sensoreinheit (4) und mit einem Messrohr (6), wobei die Sensoreinheit (4) an einem Rohrende (8) des Messrohres (6) angeordnet ist, wobei die Sensoreinheit (4) einen Sensoradapter (10) aufweist, wobei die Sensoreinheit (4) und der Sensoradapter (10) zwei Bauteile bilden und die Sensoreinheit (4) und der Sensoradapter (10) lösbar miteinander verbunden sind, und wobei der Sensoradapter (10) einen das Rohrende (8) umgreifenden Adapterrohrabschnitt (12) aufweist und an dem Rohrende (8) das Rohrende (8) verschließend angeordnet ist, **dadurch gekennzeichnet, dass** an dem Sensoradapter (10) eine den Sensoradapter (10) mit der Sensoreinheit (4) verbindende Halteklammer (18) angeordnet ist und dass die Halteklammer (18) den Sensoradapter (10) an dem Rohrende (8) sichert.

2. Sensorvorrichtung nach Anspruch 1, **dadurch gekennzeichnet, dass** der Sensoradapter (10) und das Rohrende (8) eine Verrastung (24) aufweisen.

3. Sensorvorrichtung nach einem der vorhergehenden Ansprüche, **dadurch gekennzeichnet, dass** der Sensoradapter (10) zumindest einen Schlitz (22) aufweist und dass die Halteklammer (18) zumindest teilweise in den Schlitz (22) eingreift.

4. Sensorvorrichtung nach einem der vorhergehenden Ansprüche, **dadurch gekennzeichnet, dass** zwischen der Sensoreinheit (4) und dem Sensoradapter (10) eine Dichtung (14) angeordnet ist.

5. Sensorvorrichtung nach einem der vorhergehenden Ansprüche, **dadurch gekennzeichnet, dass** die Sensoreinheit (4) ein Sensoranschlusselement (38) aufweist.

6. Kraftfahrzeug (42) mit einer Sensorvorrichtung (1) nach einem der vorhergehenden Ansprüche, mit einem Fahrwerk und mit einem Fahrzeugaufbau, wobei ein erstes Rohrende (8) eines Messrohres (6) der Sensorvorrichtung (1) an den Fahrzeugaufbau und ein zweites Rohrende (50) des Messrohres (6) an das Fahrwerk angeschlossen ist.

7. Kraftfahrzeug nach Anspruch 6, **dadurch gekennzeichnet, dass** zwischen dem Fahrzeugaufbau und dem Fahrwerk ein Stoßdämpfer (44) angeordnet ist, wobei der Stoßdämpfer (44) mit einem ersten Dämpferende (46) an den Fahrzeugaufbau und mit einem zweiten Dämpferende (48) an das Fahrwerk angeschlossen ist und wobei die Sensorvorrichtung (1) an dem Stoßdämpfer (44) angeordnet ist.

8. Kraftfahrzeug nach Anspruch 7, **dadurch gekennzeichnet, dass** das erste Rohrende (8) des Messrohres (6) an dem ersten Dämpferende (46) und das zweite Rohrende (50) des Messrohres (6) an dem zweiten Dämpferende (48) befestigt ist.

## Claims

1. Sensor device (1) comprising a sensor unit (4), which has an ultrasonic sensor (2), and comprising a measuring tube (6), wherein the sensor unit (4) is arranged at a tube end (8) of the measuring tube (6), wherein the sensor unit (4) has a sensor adapter (10), wherein the sensor unit (4) and the sensor adapter (10) form two components and the sensor unit (4) and the sensor adapter (10) are releasably connected to each other, and wherein the sensor adapter (10) has an adapter tube portion (12) surrounding the tube end (8) and is arranged at the tube end (8) so as to close the tube end (8), **characterized in that** a retaining clip (18) connecting the sensor adapter (10) to the sensor unit (4) is arranged on the sensor adapter (10) and **in that** the retaining clip (18) secures the sensor adapter (10) at the tube end (8).

2. Sensor device according to Claim 1, **characterized in that** the sensor adapter (10) and the tube end (8) have a detent connection (24).

3. Sensor device according to either of the preceding claims, **characterized in that** the sensor adapter (10) has at least one slot (22) and **in that** the retaining clip (18) engages at least partially in the slot (22).

4. Sensor device according to any of the preceding claims, **characterized in that** a seal (14) is arranged between the sensor unit (4) and the sensor adapter (10).

5. Sensor device according to any of the preceding claims, **characterized in that** the sensor unit (4) has a sensor connection element (38).

6. Motor vehicle (42) comprising a sensor device (1) according to any of the preceding claims, comprising a chassis and comprising a vehicle body, wherein a first tube end (8) of a measuring tube (6) of the sensor device (1) is connected to the vehicle body and a second tube end (50) of the measuring tube (6) is connected to the chassis.

7. Motor vehicle according to Claim 6, **characterized in that** a shock absorber (44) is arranged between the vehicle body and the chassis, wherein the shock absorber (44) is connected by way of a first absorber end (46) to the vehicle body and by way of a second absorber end (48) to the chassis, and wherein the sensor device (1) is arranged on the shock absorber (44).

8. Motor vehicle according to Claim 7, **characterized in that** the first tube end (8) of the measuring tube (6) is attached to the first absorber end (46) and the second tube end (50) of the measuring tube (6) is attached to the second absorber end (48).

## Revendications

1. Dispositif capteur (1) doté d'une unité de capteur (4) comportant un capteur à ultrasons (2) et un tube de mesure (6), l'unité de capteur (4) étant agencée à une extrémité de tube (8) du tube de mesure (6), l'unité de capteur (4) comportant un adaptateur de capteur (10), l'unité de capteur (4) et l'adaptateur de capteur (10) formant deux composants et l'unité de capteur (4) et l'adaptateur de capteur (10) étant reliés de manière amovible l'un à l'autre, et l'adaptateur de capteur (10) comportant une section de tube d'adaptateur (12) qui entoure l'extrémité de tube (8) et étant agencé à l'extrémité de tube (8) de manière à refermer l'extrémité de tube (8), **caractérisé en ce qu'**un collier de fixation (18) reliant l'adaptateur de capteur (10) à l'unité de capteur (4) est agencé sur l'adaptateur de capteur (10) et **en ce que** le collier de fixation (18) fixe l'adaptateur de capteur (10) à l'extrémité de tube (8).

2. Dispositif capteur selon la revendication 1, **caractérisé en ce que** l'adaptateur de capteur (10) et l'extrémité de tube (8) présentent un encliquetage (24).

3. Dispositif capteur selon l'une des revendications précédentes, **caractérisé en ce que** l'adaptateur de capteur (10) présente au moins une fente (22) et **en ce que** le collier de fixation (18) s'engage au moins partiellement dans la fente (22).

4. Dispositif de capteur selon l'une des revendications précédentes, **caractérisé en ce qu'**un joint (14) est agencé entre l'unité de capteur (4) et l'adaptateur de capteur (10).

5. Dispositif capteur selon l'une des revendications précédentes, **caractérisé en ce que** l'unité de capteur (4) présente un capteur optique (38).

6. Véhicule automobile (42) doté d'un dispositif capteur (1) selon l'une des revendications précédentes, d'un châssis et d'une carrosserie de véhicule, une première extrémité de tube (8) d'un tube de mesure (6) du dispositif capteur (1) étant reliée à la carrosserie de véhicule et une seconde extrémité de tube (50) du tube de mesure (6) étant reliée au châssis.

7. Véhicule automobile selon la revendication 6, **caractérisé en ce qu'**un amortisseur (44) est agencé entre la carrosserie de véhicule et le châssis, l'amortisseur (44) étant relié par une première extrémité d'amortisseur (46) à la carrosserie de véhicule et par une seconde extrémité d'amortisseur (48) au châssis, et le dispositif capteur (1) étant agencé sur l'amortisseur (44).

8. Véhicule automobile selon la revendication 7, **caractérisé en ce que** la première extrémité de tube (8) du tube de mesure (6) est fixée à la première extrémité d'amortisseur (46) et la seconde extrémité de tube (50) du tube de mesure (6) est fixée à la seconde extrémité d'amortisseur (48).
